# EUROPÄISCHE PATENTANMELDUNG

(11) **EP 2 053 290 A2**
(43) Veröffentlichungstag der Anmeldung: **29.04.2009**
(21) Anmeldenummer: 08016064.1
(22) Anmeldetag: 12.09.2008
(51) Int. Cl.: F16K 37/00, G01M 13/00

(54) **Verfahren zur Emittlung des Zustandes hinsichtlich Verschleiß und/oder Wartungsbedarf automatischer, pneumatisch betätigter Prozessarmaturen**

(30) Priorität: 27.10.2007 DE 102007051468
(71) Anmelder: Knick Elektronische Messgeräte GmbH & Co. KG, 14163 Berlin (DE)
(72) Erfinder: Schiffer, Jens-Hendrik, Dipl.-Ing., 14480 Potsdam (DE); Wohlrab, Heinz, Dipl.-Ing., 14167 Berlin (DE)
(74) Vertreter: Hübner, Gerd

(57) **Zusammenfassung**

Ein Verfahren zur Ermittlung des Zustandes hinsichtlich Verschleiß und/oder Wartungsbedarf automatischer, pneumatisch betätigter Prozessarmaturen, insbesondere von Sensorschleusen, Wechselsonden oder dergleichen, deren Armaturstellungen über Detektoren (5P, 5S, 16) erfassbar sind, sieht vor, dass aus von den Detektoren (5P, 5S, 16) erfassten Aktionsparametern (PP, PS, F) beim Wechsel der Prozessarmatur (1) zwischen zwei Armaturstellungen ein Fahrprofil (FP) generiert wird, das den Zustand der Armatur (1) hinsichtlich Verschleiß und/oder Wartungsbedarf repräsentiert.

## Beschreibung

Die Erfindung betrifft ein Verfahren zur Ermittlung des Zustandes hinsichtlich Verschleiß und/oder Wartungsbedarf automatischer, pneumatisch betätigter Prozessarmaturen, insbesondere von Sensorschleusen, Wechselsonden oder dergleichen, deren Armaturstellungen über Detektoren erfassbar sind.

Der Hintergrund der Erfindung ist am Beispiel der erwähnten Sensorschleusen darzustellen. Derartige Sensorschleusen werden in der Analysenmesstechnik eingesetzt, um den messwertempfindlichen Teil eines Sensors bei abgedichtetem, laufendem Prozess in das Messmedium zu schleusen. Bei dem Sensor kann es sich um einen pH-, Leitfähigkeits-, Sauerstoff- oder ähnlichen Sensor handeln. Üblicherweise wird der Sensor nach einer gewissen Aufenthaltszeit im Messmedium wieder ausgeschleust. Das Ausschleusen dient dem automatischen Reinigen des Sensors und ggf. dem Beaufschlagen mit Kalibriermedien, um die komplette Messeinrichtung automatisch zu kalibrieren, zu justieren oder zu validieren. Dazu ist in der Sensorschleuse ein Hohlraum - der sogenannten Reinigungskammer bzw. Kalibrierkammer - ausgebildet, in dem sich der Sensor in ausgeschleustem Zustand befindet und in den Reinigungsflüssigkeiten oder Gase bzw. Kalibriermedien eingebracht werden können.

Ansteuerung solcher Armaturen, wie einer Sensorschleuse erfolgt aus Gründen des Explosionsschutzes in der Regel durch eine elektropneumatische Steuerung. Mit der Steuerung werden zum einen die Fahrbewegung der Schleuse kontrolliert, zum anderen werden die Spül-, Reinigungs- sowie Kalibriermedien über Ventile oder mittels Dosierpumpen in die Kalibrierkammer eingebracht. Die Steuerung wiederum steht meistens in Kommunikation mit einem Transmitter, welcher die Messwerte ermittelt und an eine übergeordnete Leitstelle weiterleitet. Der Transmitter gibt ebenfalls die Information weiter, ob der Sensor gerade gereinigt oder kalibriert wird.

Die Sensorschleuse ist üblicherweise eine mechanische Armatur mit Bewegungs- und Dichteinheiten, die im Betrieb je nach Umgebungsbedingungen mehr oder weniger schnell verschleißen. Temperatur, Stärke der Verschmutzung, chemische und physikalische Eigenschaften des Messmediums sowie der zugeführten Medien und die Anzahl der mechanischen Fahrzyklen beeinflussen den Verschleiß der Sensorschleuse. Ebenso unterliegen die pneumatischen Elemente der Steuerung einem gewissen Verschleiß, der von der Anzahl der Zyklen abhängig ist, aber auch von den Einsatzbedingungen und den eingesetzten Medien. Aus einer druckschriftlichen Vorveröffentlichung der Anmelderin in Form der Bedienungsanleitung der Sensorschleusensteuerung Knick Unical 9000 ist ein Verfahren bekannt, bei dem die Fahrzyklen gezählt werden, um ab einem vorgegebenen, festen Zählerstand Wartungsbedarf zu signalisieren. Ebenfalls aus dieser Bedienungsanleitung ist es bekannt, die Sondenfahrzeit beim Stellungswechsel zu messen und bei dem Überschreiten einer festen, vorgegebenen Zeit einen entsprechenden Wartungsbedarf zu signalisieren. Ziel dieser Überwachungsverfahren nach dem Stand der Technik ist es, den Verschleiß zu ermitteln und rechtzeitig vor Ausfall der Sensorschleuse Meldungen zu generieren, um eine vorbeugende Wartung einzuleiten und einen Funktionsverlust und gegebenenfalls einen Anlagenstillstand zu vermeiden. Es hat sich jedoch herausgestellt, dass die bisherigen Verfahren nicht geeignet sind, um den momentanen Verschleißzustand zuverlässig anzugeben. Zudem ist es nach dem Stand der Technik nicht möglich, gezielt Rückschlüsse auf die jeweils betroffenen Komponenten zu ziehen. Bei einer Wartungsbedarfmeldung oder beim unerwarteten Ausfall müssen alle Komponenten der Sensorschleuse untersucht und die Schleuse muss gegebenenfalls komplett ausgetauscht werden.

Ausgehend von der geschilderten Problematik des Standes der Technik liegt der Erfindung die Aufgabe zu Grunde, ein Verfahren zur Ermittlung des Verschleißzustandes und Wartungsbedarfs einer Prozessarmatur anzugeben, das eine exaktere und detailliertere Erfassung dieser Zustandskriterien ermöglicht.

Diese Aufgabe wird laut Kennzeichnungsteil des Anspruches 1 dadurch gelöst, dass aus den von entsprechenden Detektoren zur Überwachung der Armatur erfassten Aktionsparametern und/oder aus Steuersignalen bei einem Wechsel der Prozessarmatur zwischen zwei Armaturstellungen ein Fahrprofil generiert wird, das den Zustand der Armatur hinsichtlich Verschleiß und/oder Wartungsbedarf repräsentiert. Die Armaturenfahrprofile werden also aus den verfügbaren Rückmeldungen der Armatur und gegebenenfalls auch der Steuerung während der Verfahrbewegung aufgenommen und können damit als Grundlage für Aussagen über den Verschleiß einzelner Komponenten der Armatur oder der Steuerung und zur Vorhersage eines Funktionsausfalles verwendet werden. Das erfindungsgemäße Verfahren bildet damit eine Basis dafür, dass bei einer entsprechenden Wartungsbedarfsmeldung oder auch bei einer turnusmäßigen Wartung ein Hinweis darüber gegeben werden kann, welche Komponente bereits stark verschlissen ist, damit ein gezielter Austausch oder eine Wartung dieser Komponente möglich ist.

Als erfasste Aktionsparameter können beispielsweise die Öffnungs- und Schließzeiten für die Armatur, die sie für das Verfahren zwischen zwei Endstellungen benötigt, oder auch Schaltzeiten von Ventilen oder ähnlichen Komponenten herangezogen werden. Die Erfindung macht sich dabei die Erkenntnis zu Nutze, dass sich bei einer Armatur ein Verschleiß oft durch ein geändertes Fahrverhalten äußert. So kann die Verfahrzeit deutlich ansteigen, wenn die Sensorschleuse verklebt ist oder Dichtungen aufquellen. Ebenso kann sich die Zeit aber auch verkürzen, wenn z.B. eine Dichtung stark abgerieben ist oder gänzlich fehlt. Steuerelemente, z. B. aus Ex-Schutz-Gründen verwendete Piezoventile, verändern im Laufe der Zeit ebenfalls ihr Schaltverhalten. Auch pneumatisch gesteuerte Ventile ändern im Laufe der Zeit ihre Schaltzeiten durch zunehmende Reibung, Fettablagerung oder anderweitige Einflüsse.

Auf Grund der vorstehenden Umstände kann nun bevorzugter Weise der Zustand der Armatur durch signifikante Abweichungen der durch das Fahrprofil repräsentierten Aktionsparameter von bestimmten Sollwerten, beispielsweise der Sondenfahrzeit zwischen zwei Endstellungen oder der Schaltzeiten des Steuerventils, ein Verschleißzustand der Armatur oder ein Wartungsbedarf bestimmter Komponenten davon signalisiert werden. In einer weiteren bevorzugten Ausführungsform können die Sollwerte der Aktionsparameter in Form eines Referenz-Fahrprofils in das Ermittlungsverfahren einbezogen werden. Dazu werden bei der Installation oder in einem geeigneten Zustand der Anlage ein oder mehrere Referenzfahrprofile aufgenommen und z. B. in der Steuerung oder im oben angesprochenen Transmitter und gegebenenfalls in einem nachgeschalteten Leit- oder Wartungssystem abgespeichert. Diese Referenzfahrprofile können auch über eine Kommunikationseinrichtung direkt an den Hersteller oder die Wartungsfirma des mit der Armatur bestückten Messsystems übertragen und z.B. dort archiviert werden. Im laufenden Betrieb der Anlage werden dann bei jedem Fahrzyklus automatisch die Aktionsparameter, wie Verfahrzeiten der Armatur ermittelt und abgespeichert. Über einen Vergleich der aktuellen Aktionsparameter mit den Referenzparametern kann der Zustand der Anlage und der Komponenten ermittelt werden.

Durch die Referenzfahrprofile wird berücksichtigt, dass die Fahr- bzw. Schaltzeiten der Komponenten von den Gegebenheiten der Installation, wie z. B. langen oder dünnen Zuleitungen, unterschiedlichem Versorgungsdruck der Medien oder Gegen- bzw. Unterdruck des Prozessmediums abhängig sind und damit nur bedingt mit fest vorgegebenen Zeiten verglichen werden könnten.

Weitere bevorzugte Weiterbildungen des erfindungsgemäßen Verfahrens sehen vor, dass als Detektoren für die Aktion des mindestens einen für die Ansteuerung der Armatur vorhandenen Steuerventils ein Luftströmungsschalter verwendet wird, der den im pneumatischen Versorgungsstrang für die Armatur herrschenden Luftstrom detektiert. Das dabei ermittelbare Tastverhältnis des vom Luftströmungsschalter erzeugten Signals kann - wie im Ausführungsbeispiel noch näher erläutert wird - ebenfalls für die Ermittlung des Fahrverhaltens der Armatur herangezogen werden. Anstelle eines Luftströmungsschalters kann ein Luftströmungssensor noch weitergehende verwertbare Informationen über das Fahrverhalten der Armatur oder das Schaltverhalten der Ventile liefern.

Als Positionsdetektoren für die Stellung der Armatur werden vorteilhafter Weise Endlagenschalter verwendet, die die Endposition des Kolbens der pneumatisch betätigten Armatur detektieren. Die Auswertung solcher Stellungsrückmeldungen ist besonders vorteilhaft, da die entsprechenden Detektoren üblicherweise ohnehin in Steuerungen von pneumatisch betätigten Armaturen integriert sind, um die Stellung der Armatur zu erfassen und zu gewährleisten, dass der Sensor sich in der gewünschten Betriebsposition befindet. Somit kann die Zeit vom Befehl bzw. vom Öffnen oder Schließen des Ventils bis zum Erreichen der gewünschten Endlage gemessen werden. Über die erwähnten Luftströmungsschalter oder Druckschalter kann z. B. ermittelt werden, wie lange ein Ventil von der Ansteuerung bis zum Öffnen bzw. zum Schließen benötigt. Die Verwendung solcher Detektoren ist zur Ermittlung des Totalausfalles einer Komponente üblich, daher ist die erfindungsgemäße Auswertung deren Rückmeldungen während der Verfahrbewegungen besonders vorteilhaft und erlaubt im Vorfeld eine Aussage über den Zustand einzelner Komponenten der Armatur und ihrer Steuerung.

In einer weiteren bevorzugter Ausführungsform können die Fahrprofile in einer Speichereinheit gespeichert werden. Dies erlaubt eine Bestimmung des Verschleißverlaufs der Armatur, wobei insbesondere auf die zeitliche Entwicklung der Fahrprofile bezogen auf ein Referenzprofil Bezug genommen werden kann. Durch diese Aufzeichnung des Armaturverhaltens nach Art eines "Logbuches" können die daraus gewonnen Informationen nicht nur zur Diagnose der jeweiligen Armatur, sondern auch als Grundlage für mögliche konstruktive Verbesserungen eines bestimmten Armaturtyps herangezogen werden.

Es ist schließlich verfahrenstechnisch vorgesehen, den Verschleißzustand und/oder den Verschleißverlauf der Armatur von einer prozessorgesteuerten Recheneinheit aus dem Referenzprofil und den gespeicherten Fahrprofilen automatisch ermitteln und über eine Meldeeinheit ausgeben zu lassen. Aus dieser Aufbereitung der zustands- und verschleißrelevanten Aktionsparameter der Armatur kann der künftige Verschleißzustand bzw. -verlauf vorausberechnet und daraus der Zeitpunkt einer Wartung und/oder eines Komponentenaustauschs an der Armatur vorausbestimmt werden. Dies hat den entscheidenden Vorteil, dass für die Wartung ein geeigneter Zeitpunkt gewählt werden kann und die möglicherweise notwendigen Tauschkomponenten rechtzeitig beschafft werden können. Dadurch ist bei der Wartung selbst das entsprechende Werkzeug vorhanden, was wiederum die Wartungszeiten und damit die Stillstandszeiten der Armatur oder gar des damit bestückten Prozesses wesentlich reduziert.

Weitere Merkmale, Einzelheiten und Vorteile des erfindungsgemäßen Verfahrens sind der nachfolgenden Beschreibung entnehmbar, in der ein Ausführungsbeispiel an Hand der beigefügten Zeichnungen näher erläutert wird. Es zeigen:
- Fig. 1: ein Pneumatikschaltbild eines Antriebes einer Sensorschleuse, und
- Fig. 2: ein Fahrprofil der Sensorschleuse gemäß Fig. 1 auf der Basis des zeitlichen Verhaltens von Signalen auf der Basis verschiedener Detektoren innerhalb des Antriebs der Sensorschleuse.

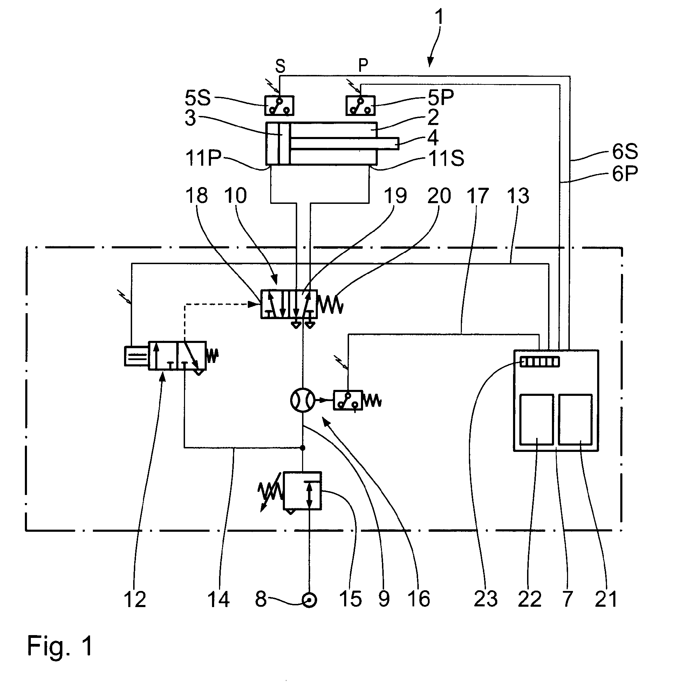

In Fig. 1 ist von einer beispielsweise zur Messung des pH-Wertes in einer Prozessflüssigkeit dienenden Armatur lediglich die pneumatische Antriebseinheit 1 in Form eines Zylinders 2 mit darin verschiebbar gelagertem Kolben 3 gezeigt. Mit der Kolbenstange 4 ist der eigentliche pH-Messsensor bewegungsgekoppelt, so dass durch eine Betätigung der Antriebseinheit 1 der Sensor zwischen seiner in die Prozessflüssigkeit eingetauchten Messposition und einer in die Kalibrierkammer der Armatur zurückgezogenen Serviceposition verschiebbar ist. Diese beiden Positionen korrelieren mit den Endpositionen P und S des Kolbens 3 im Zylinder 2, die durch Endlagenschalter 5P und 5S als Detektoren erfasst werden. Die Endlagenschalter 5P und 5S stehen signaltechnisch über Verbindungsleitungen 6P, 6S mit einer zentralen Steuerung 7 in Verbindung.

Für die Betätigung der pneumatischen Antriebseinheit 1 ist eine Druckluftquelle 8 vorgesehen, von der aus über eine zentrale Druckleitung 9 der Zylinder 2 mit Druckluft versorgbar ist. Dies erfolgt über ein 5/2-Wege-Sondenventil 10, das nach Art einer pneumatischen Weiche über seine zwei ansteuerbaren Stellungen jeweils einen der beiden Druckluftanschlüsse 11P, 11S mit Druckluft beaufschlagt. In der gezeigten Stellung des Sondenventils 10 ist der Druckluftanschluss 11 S aktiv, wodurch der Kolben 3 in der Serviceposition S steht.

Das Sondenventil 10 ist durch ein als 3/2-Wege-Piezo-Ventil ausgelegtes Steuerventil 12 pneumatisch gesteuert. Die Ansteuerung des Steuerventils 12 erfolgt über eine Signalleitung 13 von der Steuerung 7 her. Die Druckluftversorgung des Steuerventils 12 erfolgt durch eine Abzweigleitung 14 von der zentralen Druckleitung 9 her. Zur Begrenzung des Drucks ist dabei zwischen der Abzweigung der Abzweigleitung 14 von der Druckleitung 9 und der Druckluftquelle 8 ein Druckregler 15 in die Druckleitung 9 eingebaut.

Zur Erfassung der Strömungsverhältnisse in der Druckleitung 9 ist schließlich noch ein Luftströmungsschalter 16 zwischen der Abzweigung der Abzweigleitung 14 und dem Sondenventil 10 in die Druckleitung 9 integriert. Dieser Luftströmungsschalter 16 gibt ein entsprechendes Signal über die Verbindungsleitung 17 zur Steuerung 7, sobald in der Druckleitung 9 Luft für die Betätigung des Kolbens 3 strömt. Wird der Luftstrom durch ein Blockieren des Kolbens 3 unterbrochen, fällt der Luftströmungsschalter 16 entsprechend wieder ab.

Zur Verschiebung der Armatur aus der in Fig. 1 gezeigten Servicestellung wird über die zentrale Steuerung 7 das Piezo-Ventil 12 angesteuert, das die Druckluftquelle 8 mit dem Steueranschluss 18 des Sondenventils 10 verbindet. Dadurch wird der Ventilschieber 19 gegen die Wirkung der Feder 20 verschoben und die Druckluftquelle 8 entsprechend mit dem Druckluftanschluss 11P verbunden. Der Kolben 3 wird damit in die Messposition P verschoben, wobei einerseits die Endlagenschalter 5S und 5P zeitlich nacheinander den Signalzustand wechseln und andererseits während des Verfahrens des Kolbens 3 der Luftströmungsschalter 16 anspricht und ein entsprechendes Signal an die Steuerung 7 abgibt. Mit Erreichen der Messposition P kommt die Strömung in der Druckleitung zum Erliegen, was vom Luftströmungsschalter 16 und dem Endlagenschalter 5P detektiert wird.

Der gegenläufige Vorgang des Ausschleusens des Sensors durch Verfahren des Kolbens 3 aus der Messposition P in die Serviceposition S erfolgt entsprechend umgekehrt durch Ansteuerung des Piezo-Ventils 12 und Sondenventils 10.

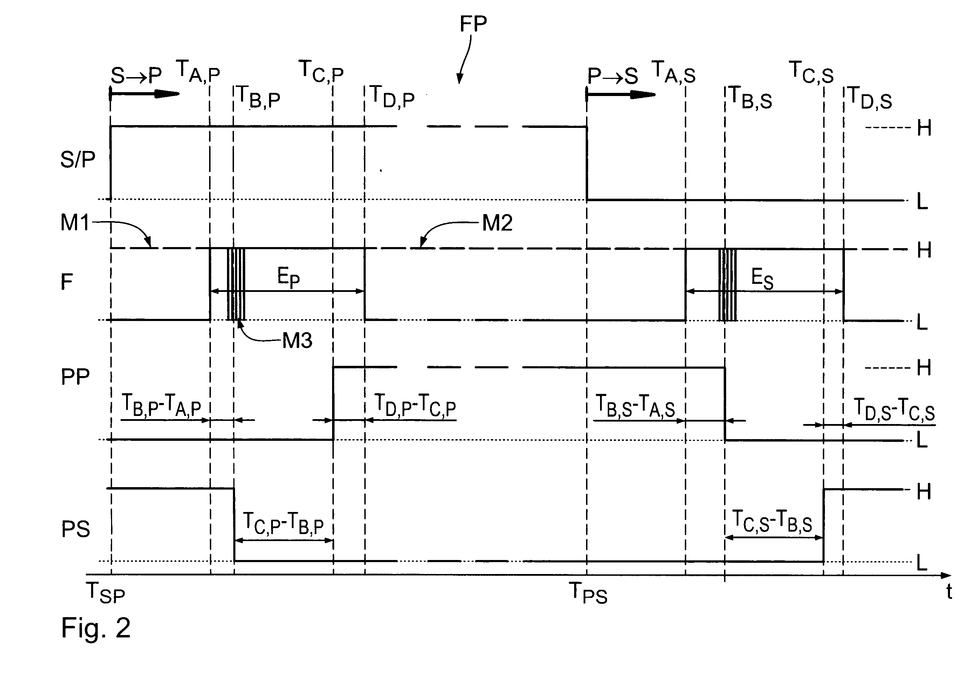

An Hand von Fig. 2 wird nun ein Fahrprofil FP der mit der Antriebseinheit 1 betätigten Armatur näher erläutert. In diesem Diagramm sind bezogen auf die horizontale Zeitachse t vier Signale aufgetragen, nämlich das Steuersignal S/P für das Piezo-Ventil 12, das vom Luftströmungsschalter 16 abgegebene Strömungssignal F und die Positionssignale PP bzw. PS der Endlagenschalter 5P und 5S. Alle Signale haben zwei Spannungsniveaus, nämlich "niedrig" (= L) und "hoch" (= H).

Die Signale S/P, F, PP und PS unmittelbar vor dem Zeitpunkt t = T_{SP} spiegeln die Situation der Anordnung wieder, wie sie in Fig. 1 dargestellt ist. Das Piezo-Ventil 12 ist geschlossen (Signal S/P = L). Es strömt keine Luft in die Druckleitung (Signal F = L), der Endlagenschalter 5P ist inaktiv (Signal P = L) und der Endlagenschalter 5S ist aktiv (Signal PS = H). Zum Zeitpunkt t = T_{SP} wird über die zentrale Steuerung 7 die Betätigung der Armatur angesteuert. Das Piezo-Ventil 12 erhält das entsprechende Signal S/P = H. Alle weiteren Signale F, PP und PS bleiben unverändert im Signalzustand L, da das Piezo-Ventil 12 eine gewisse Anlaufzeit benötigt, um das Sondenventil 10 zu betätigen und die Druckleitung 9 zu öffnen. Dies ist zum Zeitpunkt T_{A,P} der Fall, das Signal F wechselt vom Signalzustand L zu H. Die Signale der Endlagenschalter 5P und 5S bleiben nach wie vor unverändert. Durch die Beaufschlagung des Kolbens 3 mit Druckluft beginnt sich dieser aus der Position S zu bewegen, so dass zum Zeitpunkt T_{B,P} der Endlagenschalter 5S abfällt. Das Signal PS wechselt von H nach L. Der Kolben 3 erreicht zum Zeitpunkt T_{C,P} die Messposition P, so dass der Endlagenschalter 5P anspricht und das Signal PP von L nach H wechselt. Nach einer relativ kurzen Zeitspanne kommt der Luftstrom in der Druckleitung 9 zum Erliegen, so dass zum Zeitpunkt T_{D,P} der Luftströmungsschalter 16 abfällt und das Signal entsprechend von H nach L wechselt. In der Messposition bleibt das Piezo-Ventil 12 angesteuert, so dass das Signal S/P auf H bleibt.

Zum Ausschleusen des Sensors wird über die zentrale Steuerung das Piezo-Ventil 12 deaktiviert, in dem das Signal S/P von H auf L zum Zeitpunkt T_{PS} umgesteuert wird. Das Sondenventil 10 wechselt in die in Fig. 1 gezeigte Stellung zurück, so dass über die Druckleitung 9 der Druckluftanschluss 11 S zur Überführung des Kolbens 3 in die Serviceposition S mit Druckluft beaufschlagt werden kann. Entsprechend wechselt das Signal F des Luftströmungsschalters 16 zum Zeitpunkt T_{A,S} von L nach H. Die Signale PP bzw. PS der Endlagenschalter 5P bzw. 5S bleiben auf den Niveaus H bzw. L. Erst mit dem Ansprechen des Kolbens 3 auf die eingeleitete Druckluft und dessen Ausfahren aus der Messposition P fällt der Endlagenschalter 5P ab und das Signal PP wechselt zum Zeitpunkt T_{B,S} von H auf L. Nach dem Durchfahren des Zylinders 2 erreicht der Kolben 3 wieder die Serviceposition S, so dass der Endlagenschalter 5S anspricht und zum Zeitpunkt T_{C,S} das Signal PS von L nach H wechselt. Nach einer kurzen Zeitspanne bis zum Zeitpunkt T_{D,S} kommt die Luftströmung in der Druckleitung 9 wieder zum Erliegen, so dass der Luftströmungsschalter 16 wieder abfällt und das Signal F zum Zeitpunkt T_{D,S} von H nach L wechselt.

Bei einer ordnungsgemäß arbeitenden Armatur, die nicht durch Prozesseinflüsse und Verschleiß beeinträchtigt ist, ist das vorstehend erörterte Fahrprofil bestehend aus den Signalen S/P, F, PP und PS innerhalb bestimmter Grenzen signifikant. Es kann mit Hilfe einer ordnungsgemäßen Armatur als Referenzprofil aufgezeichnet und beispielsweise in der zentralen Steuerung 7 in einem entsprechenden Speicher 21 abgelegt werden.

Bei jeder Betätigung der Armatur können dann die entsprechenden Signale wiederum erfasst und mit diesem Referenzprofil mit Hilfe einer Recheneinheit 22 in der zentralen Steuerung 7 verglichen werden. Dabei sind beispielhaft folgende Fehlerzustände detektierbar, wenn die Armatur nicht mehr ordnungsgemäß arbeitet:
- Wie bei Pfeil M1 in Fig. 2 angedeutet ist, ist das Strömungssignal F im Zustand H, obwohl sich der Kolben in der Serviceposition S befindet. Dies ist ein Zeichen dafür, dass aus dem System Luft entweichen kann, also beispielsweise der Sensor in der Armatur ausgebaut oder letztere undicht ist.
- Entsprechend ist ein Niveau H des Signals F bei Pfeil M2 ein Zeichen dafür, dass die Armatur undicht ist.
- Ist die Periode T_{B,P} - T_{A,P} bzw. T_{B,S} - T_{A,S} zu lang, ist dies ein Zeichen dafür, dass die Sonde verklebt ist, also nur schwer in Bewegung zu setzen ist oder die beiden Endlagenschalter 5S bzw. 5P verzögert schalten. Sind diese Zeitdauern zu kurz oder gar negativ, ist dies ein Zeichen dafür, dass der Luftströmungsschalter 16 defekt ist.
- Grundsätzlich kann durch die Periode T_{C,P} - T_{B,P} bzw. T_{C,S} - T_{B,S} die Fahrzeit der Sonde zwischen den beiden Endlagen bestimmt werden. Sind die Fahrzeiten zu lange, kann dies ein Zeichen ebenfalls für eine Verklebung der Armatur bzw. aufgequollene Dichtungen innerhalb der Armatur sein. Verkürzte Fahrzeiten sprechen für verschlissene oder fehlende Schleusendichtungen.
- Wie bei Pfeil M3 im Signalverhalten des Luftströmungsschalters 15 angedeutet ist, kann das Signal F während des Verfahrens des Kolbens 3 "flattern", was für eine kurzzeitige Unterbrechung des Druckluftstromes in den Zylinder 2 spricht. Dies bedeutet, dass sich der Kolben 3 ruckartig im Zylinder 2 bewegt. Durch die Ermittlung des Tastverhältnisses E_{P} zwischen den beiden Signalniveaus L und H lassen sich Rückschlüsse über die Gleichmäßigkeit der Bewegung des Kolbens 3 ziehen. Ein Tastverhältnis E_{P} von 100% bedeutet eine vollkommen gleichmäßige Durchführung der Bewegung ohne Unterbrechung des Druckluftstromes. Bei einer ungleichmäßigen Bewegung mit ruckartigem Ablauf fällt das Signal F umso öfter ab, je häufiger der Luftstrom unterbrochen wird. Ein niedriges Tastverhältnis zeigt daher eine stark ruckartige Bewegung des Kolbens 3 an. Die entsprechenden Tastverhältnisse E_{P} beim Fahren der Armatur in die Messposition P bzw. Es beim Fahren die Serviceposition S kann in das Fahrprofil aufgenommen werden.
- Sind die Perioden T_{D,P} - T_{C,P} bzw. T_{D,S} - T_{C,S} zu kurz oder negativ, ist dies ein Zeichen dafür, dass die Sonde "kriecht" oder der Endlagenschalter 5P bzw. 5S verzögert schaltet.

Bei einer Auswertung der jeweils bei jedem Verfahren aufgenommenen Fahrprofile durch einen Vergleich gegenüber dem gespeicherten Referenzprofil kann durch das in der Recheneinheit 22 einprogrammierte Expertenwissen automatisch eine Bewertung des Armaturenverhaltens vorgenommen und entsprechende Angaben über zukünftige Wartungszeitpunkte, Ausfallrisiken bestimmter Komponenten usw. auf einer Anzeigeeinheit 23 der Steuerung 7 ausgegeben werden.

## Patentansprüche

1. Verfahren zur Ermittlung des Zustandes hinsichtlich Verschleiß und/oder Wartungsbedarf automatischer, pneumatisch betätigter Prozessarmaturen, insbesondere von Sensorschleusen, Wechselsonden oder dergleichen, deren Armaturstellungen und/oder -aktionen über Detektoren (5P, 5S, 16) erfassbar sind, **dadurch gekennzeichnet, dass** aus von den Detektoren (5P, 5S, 16) erfassten Aktionsparametern (PP, PS, F) und/oder Steuersignalen (S/P) bei einem Wechsel der Prozessarmatur (1) zwischen zwei Armaturstellungen ein Fahrprofil (FP) generiert wird, das den Zustand der Armatur (1) hinsichtlich Verschleiß und/oder Wartungsbedarf repräsentiert.

2. Verfahren nach Anspruch 1, wobei die Betätigungsaktionen der Armatur zum Wechsel zwischen definierten Armaturstellungen über mindestens ein Steuerventil (12, 10) in einer Druckluftzuleitung (9) gesteuert und wobei die jeweilige Armaturstellung über Positionsdetektoren (5P, 5S) erfasst wird, **dadurch gekennzeichnet, dass** während einer Armaturbetätigung aus den Aktionsparametern (PP, PS, F) und/oder Steuersignalen (S/P) des mindestens einen Steuerventils (12, 10), der Positionsdetektoren (5P, 5S) und/oder eines Luftströmungssensors, vorzugsweise Luftströmungsschalters (16), der den im pneumatischen Versorgungsstrang (9) für die Armatur (1) herrschenden Luftstrom detektiert, das Fahrprofil (FP) ermittelt wird.

3. Verfahren nach Anspruch 2, **dadurch gekennzeichnet, dass** im Armatur-Fahrprofil (FP) signifikante Abweichungen von Sollwerten der Aktionsparameter (PP, PS, F) des mindestens einen Steuerventils (12, 10), der Positionsdetektoren (5P, 5S) und/oder des Luftströmungssensors (16) Verschleiß von und/oder Wartungsbedarf an Komponenten der Armatur (1) signalisieren.

4. Verfahren nach einem der Ansprüche 1 bis 3, **dadurch gekennzeichnet, dass** die Sollwerte der Aktionsparameter (PP, PS, F) als Referenz-Fahrprofil in das Ermittlungsverfahren einbezogen werden.

5. Verfahren nach Anspruch 4, **dadurch gekennzeichnet, dass** das Tastverhältnis (E_{P}, E_{S}) des von einem Luftströmungsschalter (16) als Luftströmungssensor beim Stellungswechsel der Armatur (1) erzeugten Signals (F) für die Ermittlung des Fahrverhaltens der Armatur (1) herangezogen wird.

6. Verfahren mindestens nach Anspruch 2, **dadurch gekennzeichnet, dass** als Positionsdetektoren für die Stellung der Armatur (1) Endlagenschalter (5P, 5S) verwendet werden, die die Endposition des Kolbens (1) der pneumatisch betätigten Armatur (1) detektieren.

7. Verfahren nach einem der vorgenannten Ansprüche, **dadurch gekennzeichnet, dass** die während der Armaturstellungswechsel gewonnenen Fahrprofile (FP) in einer Speichereinheit (21) gespeichert werden und aus ihrer zeitlichen Entwicklung insbesondere bezogen auf ein Referenzprofil der Verschleißverlauf der Armatur (1) bestimmt wird.

8. Verfahren nach Anspruch 7, **dadurch gekennzeichnet, dass** der Verschleißzustand und/oder -verlauf der Armatur (1) von einer prozessorgesteuerten Recheneinheit (22) aus dem Referenzprofil und den gespeicherten Fahrprofilen (FP) automatisch ermittelt und über eine Meldeeinheit (23) ausgegeben wird.

9. Verfahren nach Anspruch 8, **dadurch gekennzeichnet, dass** der zukünftige Verschleißzustand und/oder -verlauf der Armatur (1) von der Recheneinheit (22) vorausberechnet und daraus der Zeitpunkt einer Wartung und/oder eines Komponententauschs an der Armatur (1) vorausbestimmt wird.
